# EUROPEAN PATENT SPECIFICATION

(11) **EP 2 497 026 B1**
(45) Date of publication and mention of the grant of the patent: **07.12.2016**
(21) Application number: 09851163.7
(22) Date of filing: 04.11.2009
(51) Int. Cl.: G06F 13/10, G06F 13/38, G06F 15/167

(54) **ELECTRONIC DATA PROCESSING SYSTEM HAVING A VIRTUAL BUS SERVER APPLICATION**
ELEKTRONISCHES DATENVERARBEITUNGSSYSTEM MIT VIRTUELLER BUSSERVERANWENDUNG
SYSTÈME DE TRAITEMENT DE DONNÉES ÉLECTRONIQUES AYANT UNE APPLICATION DE SERVEUR DE BUS VIRTUELLE

(43) Date of publication of application: 12.09.2012
(73) Proprietor: Deere & Company, Moline, IL 61265 (US)
(72) Inventor: HOEH, Michael, 66504 Bottenbach (DE); SCHNEIDER, Joseph, P., Lansing MI 48917 (US); MEYER, Axel, 65207 Wiesbaden (DE); SMART, David, C., Johnston IA 50131 (US)
(74) Representative: Holst, Sönke
(86) International application number: PCT/US2009/063222
(87) International publication number: WO 2011/056170

(56) References cited:
- US-A1- 2003 037 178
- US-A1- 2006 059 287
- US-A1- 2008 320 501
- US-A1- 2009 125 671
- US-A1- 2009 193 074
- US-B1- 6 987 961
- US-B2- 7 096 305
- US-B2- 7 562 175

## Description

### Field of the Invention

This invention relates to an electronic data processing system having a virtual bus server application.

### Background of the Invention

For certain electronic data processing systems that are associated with vehicles and other equipment, some applications depend upon the reliability of a custom dynamic link library for proper communication between a data bus and certain hardware. The custom dynamic link library may need to be replaced, modified or updated to function properly as different hardware items are removed or connected to the data bus. Even if an application is properly programmed and debugged, vexing interaction problems may become apparent only when an application attempts to communicate with hardware or another application via the custom dynamic link library. Therefore, there is a need for a platform that supports software emulation of vehicle data bus and network elements (e.g., hardware) without using a custom dynamic link library or a dynamic link library that contains opaque or proprietary code from another supplier. In addition, there is a need for a platform that primarily relies upon a well-tested interaction of the custom hardware dynamic link library with the operating system running on the data processing system such that the application is somewhat isolated from the operation the custom hardware dynamic link library.

US 6 987 961 B1, considered as generic, describes a mobile phone with a base-band processor and an applications processor that communicated with each other by emulating an internal Ethernet within the phone. TCP/IP stacks in each processor receive data from high-level applications for transmission to the other processor. Ethernet-emulating drivers are called by the IP layers. An Ethernet-emulating transmit driver writes IP-packet data to a shared memory and sends an interrupt to the other processor, which activates a receive routine that reads the IP packet data from the shared memory and sends it up through the TCP/IP stack.

### Summary of the Invention

An electronic data processing system comprises a first application program that is capable of operating in a first mode and a second mode. The first mode comprises software emulation of a vehicle data bus and one or more network elements. The second mode comprises communications access to the vehicle data bus and the one or more network elements. The electronic data processing system supports the execution of an operating system. A virtual bus server application comprises shared memory and a message router. The operating system facilitates communication between at least two dynamic link libraries via the shared memory. The message router is capable of routing data messages between the first application and a first hardware module as a network element in the second mode. A first dynamic link library interface provides an interface between the first application program and the virtual bus server application. The first dynamic link library is capable of communicating with the shared memory of the virtual bus server application. A second dynamic link library interface provides an interface between the virtual bus server application and the first hardware module. The second dynamic link library is capable of communicating with the shared memory of the virtual bus server application.

### Brief Description of the Drawings

FIG. 1 is a block diagram of one embodiment of a data processing system having a virtual bus server application.
FIG. 2 is a block diagram of another embodiment of a data processing system having a virtual bus server application.
FIG. 3 is a flow chart of a method for managing a data processing system having a virtual bus server application.

### Description of the Preferred Embodiment

As used throughout this document, the term dynamic link library interface may include one or more of the following components: executable code or software instructions, data, or other resources. The dynamic link library interface may cooperate with or represent an additional layer that interfaces with the operating system. The dynamic link library interface may be shared by or accessible to multiple applications. For dynamic linking of the dynamic link library interface, a file or code may be placed into one or more separate files. The application programs that call the dynamic link library interface are linked to the separate file or files of the dynamic link library at run time via the support of the operating system. The access to shared memory within a dynamic link library is generally limited because of potential technical problems including the potential for increased security vulnerability and the potential for increased data corruption, where multiple processes interact with the shared memory.

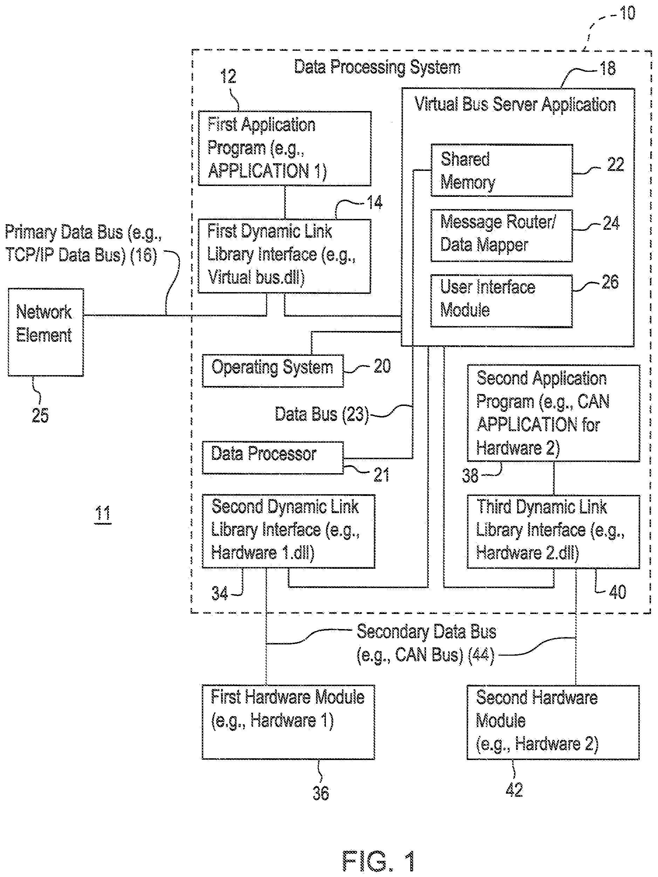

In accordance with one embodiment, FIG. 1 illustrates a system 11 comprising electronic data processing system 10. In one example, the hardware of the electronic data processing system 10 comprises an electronic data processor 21 (e.g., microprocessor) that is coupled to electronic memory (e.g., shared memory 22) or another data storage device via a data bus 23.

FIG. 1 illustrates the relationship between software modules (e.g., software components), hardware modules, or both of the data processing system 10. The lines interconnecting the software modules or hardware modules may represent physical data transmission paths, logical data transmission paths, or both. Physical data transmission paths represent transmissions of data messages or symbols via electrical signals over a transmission line or a data bus. Logical data transmission paths represent virtual transmission paths or communications between software components or software modules.

The data processing system 10 comprises a first application program 12 (e.g., application 1) that is arranged to communicate with a first dynamic link library interface 14 (e.g., virtualbus.dll). The first dynamic link library interface 14 supports communication between the first application program 12 and the virtual bus server application 18. The first hardware module 36 is arranged to communicate with the second dynamic link library interface 34 (e.g., hardware1.dll). The second dynamic link library interface 34 supports communication between the first hardware module 36 (e.g., hardware 1) and the virtual bus server application 18. The second hardware module 42 (e.g., hardware 2) is arranged to communicate with third dynamic link library interface 40 (e.g., hardware2.dll). The third dynamic link library interface 40 supports communication between the second hardware module 42 and the virtual bus server application 18. Further, the third dynamic link library interface 40 may support communication between a second application program 38 (e.g., Controller Area Network (CAN) application for hardware 2), associated with the second hardware module 42, and the virtual bus server application 18. In one embodiment, the third dynamic link library interface 40 provides an interface between the virtual bus server application 18 and the second application program 38 and between the virtual bus server application 18 and a second hardware module 42.

The operating system 20 is linked to and provides software routines and instructions for supporting the execution of the virtual bus server application 18. In one embodiment, the virtual bus server application 18 comprises shared memory 22, a message router 24 (or message router/data mapper 24), and an optional user interface module 26. The message router 24 comprises the following software modules or hardware modules: a manager for managing the shared memory 22, a router that comprises an interface between any software modules, hardware modules, software applications and data bus protocols, and a data mapper for mapping data messages from a source (e.g., software application or hardware module) to a destination (e.g., software application or hardware module) via the shared memory 22. The user interface module 26 supports a user connection of a computer or other user interface to a data port (e.g., a data transceiver coupled to a data bus 23) of the data processing system 10 for configuration of, maintenance of, diagnostic testing of, or updating the software programs of the data processing system.

A network element 25 may communicate with the data processing system 10 via the primary data bus 16. In general, the network element 25 comprises a controller, sensor, actuator, data processing system, computer or other electronic device capable of communicating with the data processing system 10 via the primary data bus 16. For example, the network element 25 may comprise a remote data processing system 10 with similar components to data processing system 10 of FIG. 1. In the configuration of FIG. 1, the first dynamic link library interface 14 supports communications of the network element 25 with the first dynamic link library interface. The primary data bus 16 may be implemented over a wireline connection between the network element 25 and the data processing system 10 or via a wireless connection that includes wireless transceivers (e.g., broadband wireless transceivers that support an Internet connection), for example. In one configuration, the primary data bus 16 may comprise a TCP/IP data bus.

TCP/IP refers to a transmission control protocol (TCP) and Internet Protocol (IP) that represents a set of data protocols for communications networks (e.g., Internet). TCP/IP data protocol comprises a link layer (or network interface layer), a transport layer and an application layer, where the link layer encapsulates or packages underlying data from the application into frames for transmission over the communication network.

The first hardware module 36 communicates with the second dynamic link library interface 34 via a secondary data bus 44. Similarly, the second hardware module 42 is capable of communicating with the third dynamic link library interface 40 via the secondary data bus 44. In one configuration, the secondary data bus comprises a field data bus, a vehicle data bus, or a Controller Area Network (CAN) data bus.

Controller area network is a standard protocol for a vehicle data bus that supports communication of data messages (e.g., in frames) between controllers and other network devices (e.g., sensors and actuators) over a vehicle data bus. The ISO 11783-2 is a CAN physical layer standard for the agricultural industry.

In one configuration, the electronic data processing system 10 comprises a first application program 12 that is capable of operating in a first mode and a second mode, where the first mode comprises a software emulation of a vehicle data bus (e.g., secondary data bus 44) and one or more network elements (e.g., controllers, sensors or actuators) and where the second mode comprises communications access to the vehicle bus (e.g., secondary data bus 44) and the one or more network elements. The software emulation mode may be used to develop or test the first application program 12 for proper functionality independent of the proper operation or compatibility of one or more of the following software or hardware components: the first hardware module 36, the second dynamic link library interface 34, the secondary data bus 44, the second hardware module 42, the third dynamic link library interface 40, and the second application program 38. Accordingly, the first mode or software emulation mode may be used in diagnostic tests to isolate problems with certain modules or components (e.g., software or hardware) associated with the data processing system 10.

The second mode supports modifying, upgrading or replacing the first application program 12 without the need for modifying, upgrading or replacing of the second dynamic link library interface 34 or the third dynamic link library interface 40 or without modifying, upgrading, or replacing the first hardware module 36 or the second hardware module 42, for example. Instead, such modifying, upgrading or replacing, is rendered unnecessary because the virtual bus server application 18 provides the necessary link to manage and route data messages between the first application program 12 and the first hardware module 36 and/or between the first application program 12 and the second hardware module 42 (or its associated second application program 38). The virtual bus server application 18 may support the first hardware module 36 operating on a different data transmission speed and protocol data bus, than the primary data bus 16. For instance, the virtual bus server application 18 may support the first application program 12 and the first dynamic link operating over a TCP/IP data bus as the primary data bus 16, whereas the virtual bus server application 18 may support the first hardware module 36, the second hardware module 42, or the second application program 38 functioning over a CAN data bus (or other vehicle data bus) as the secondary data bus 44. The TCP/IP data bus may support the reliable transmission and reception of data messages, data packets, frames, symbols, bytes, or bits at greater transmission speeds than those reliably permitted on the CAN data bus.

The virtual bus server application 18 comprises a shared memory 22, a message router 24, and an optional user interface module 26. The operating system 20 and the virtual bus server application 18 facilitate communication between at least two of the first application program 12, the first hardware module 36, the second hardware module 42, and the second application program 38 through two or more dynamic link library interfaces via the shared memory 22 of the virtual data bus server application 18. For example, the message router 24 is arranged to or programmed to route data messages between the first application program 12 and a first hardware module 36 as a network element in the second mode. A first dynamic link library interface 14 provides an interface between the first application program 12 and the virtual bus server application 18. The first dynamic link library interface 14 is capable of communicating with the shared memory 22 of the virtual bus server application 18. A second dynamic link library interface 34 provides an interface between the virtual bus server application 18 and the first hardware module 36. The second dynamic link library interface 34 is capable of communicating with the shared memory 22 of the virtual bus server application 18.

The virtual bus server application 18 comprises software modules or instructions to manage the routing of data messages between different applications, hardware modules, or both via one or more dynamic link library interfaces. The virtual bus server application 18 reduces data corruption and security vulnerability by use of read counter or other global information to manage read and overwrite capability of the shared memory 22. For instance, the virtual bus server application may prevent a software application or hardware module from accessing a stored message in the shared memory 22 (or from overwriting the stored data message with a newer message or later message) if a threshold of a read counter is exceeded.

The shared memory 22 supports communications between a primary data bus 16 and a secondary data bus, where the primary data bus 16 operates at a different transmission speed in symbols, words, bytes, or bits per second than the secondary data bus 44. The shared memory 22 supports communications between a primary data bus 16 and a secondary data bus, where the primary data bus 16 operates with different data formats or data protocols. In one example, the primary data bus 16 comprises a TCP/IP compatible data format and wherein the secondary data bus comprises a CAN data bus data format or an Ethernet compatible data format.

The virtual bus server application 18 manages or configures the shared memory 22 in accordance with one or more possible configurations, that may be applied alternately or cumulatively. In a first configuration, the shared memory 22 supports a virtual TCP/IP data connection, internal to the virtual bus server application 18 of the data processing system 10. The virtual TCP/IP or other data format data connection (e.g., Ethernet) is capable of exchanging data messages between an application, hardware or both via the first dynamic link library interface 14 and the second dynamic link library interface 34 in the shared memory 22. The virtual TCP/IP or other data format connection is also capable of exchanging data messages between an application, hardware or both through the first dynamic link library interface 14, the second dynamic link library interface 34, and the third dynamic link library interface 40.

In a second configuration, the shared memory 22 uses the TCP/IP protocol or other data format to communicate with the first dynamic link library interface 14 or via the first dynamic link library interface 14 to the first application program 12.

In a third configuration, the shared memory 22 uses the TCP/IP protocol or other data format to communicate with the second dynamic link library interface 34 or via the second dynamic link library interface 34 to the first hardware module 35.

In a fourth configuration, certain software applications (12, 38) or hardware modules (36, 42) communicate via the virtual bus server application 18, such as the first application program 12, the first hardware module 36, the second hardware module or the second application program 38. An accessing module may comprise any software applications (12, 38) or hardware modules (36, 42) that are granted communication access to the virtual data bus server 18 for the exchange of one or more data messages between a pair or group of software applications (12, 18), a pair or group of hardware modules (36, 42), or a mixed group or pair of a software application (12, 18) and a hardware application (36, 42). If one accessing module writes to the virtual bus server application 18 through its servicing dynamic link library interface (14, 34, 40), the other accessing modules recognize that there is a new message and the servicing dynamic link library interface (14, 34, 40) delivers it to the other accessing module (e.g., for point-to-point communications) or modules (e.g., for point-to-multipoint communications). For instance, if the first application program 12 writes to the shared memory 22 of the virtual bus server application 18 through the first dynamic link library interface 14, the first hardware module 36 recognizes through the second dynamic link library interface 34 that there is new message to be delivered to the first hardware module 36. The message router 24 supports providing the accessing modules with a global routing data or global routing variable. The global routing data or global routing data may include the destination module network address, the origination module network address, a security authorization code, an authentication code, an encryption key, encryption definition data, an encryption algorithm identifier, read counter data, and a read counter threshold, for example. The message router 24 or its read counter may track the number or read access for each corresponding data message. If the read counter is equal to the number of accessing modules, it may indicate that an earlier data message has been read or delivered by the participating accessing modules, and that the earlier data message may be overwritten by a later data message (generated by another accessing module).

The virtual bus server application 18 manages or configures the message router 24 in accordance with several configurations, which may be applied alternately or cumulatively. In a first configuration, the message router 24 passes through data from the first application program 12 via the first dynamic link library interface 14 and maps it to the address of the first hardware module 36. In a second configuration, the message router 24 passes through data from the first hardware module 36 via the second dynamic link library interface 34 and maps it to the address of the first application program 12. In a third configuration, the message router 24 passes through data from the second application program 38 via the second dynamic link library interface 34 and maps it to the address readable by the first application program 12 in the shared memory 22. In a fourth configuration, the message router 24 passes through data from the first application program 12 via the first dynamic link library interface 14 and maps it to the address readable by the second application program 38 in the shared memory 22. In a fifth configuration, the message router 24 passes through data from the second hardware module 42 via the third dynamic link library interface 40 and maps it to the address readable by the first application program 12 in the shared memory 22. In a sixth configuration, the message router 24 passes through data from the first application program 12 via the first dynamic link library interface 14 and maps it to the address readable by the second hardware module 42 in the shared memory 22. In a seventh configuration, the message router 24 routes data messages between the first application 12 and the first hardware module 36 in the second mode.

The virtual bus server application 18 comprises a computer program or software instructions that reside on or is loaded in the electronic memory of the data processing system 10, as opposed to a separate hardware server or separate remote computer that is accessed through wireline transmission line or wireless communications link. The virtual bus server application 18 can support communications between the first application program 12 and one or more hardware modules on a point to point or point to multi-point basis. Advantageously, in the first mode, the first application program 12 can function independently of the second dynamic link library interface 34 and the first hardware module 36 because network elements are virtual and emulated by software. Further, in the second mode the application program 12 can function somewhat independently of the second dynamic link library interface 34 associated with the first hardware module 36 because the virtual bus server application 18 acts as intermediary or broker that facilitates: (a) the first application program's use of the first dynamic link library interface 14 to communicate with the first hardware module 36, (b) the first hardware's use of the second dynamic link library interface 34 to communicate with the first application program 12, and (c) elimination of the need to upgrade, modify, or replace the second dynamic link library interface 34 if the first application program 12 is upgraded, modified or replaced.

Each of the software applications (12, 18, 38) or software components in FIG. 1 may be configured as software instructions that are recorded on a data storage medium or data storage media. The data storage media may comprise nonvolatile electronic memory, a magnetic disk, an optical disk, a magnetic tape, a magnetic recording medium, and an optical recording medium, among other possible data storage mediums.

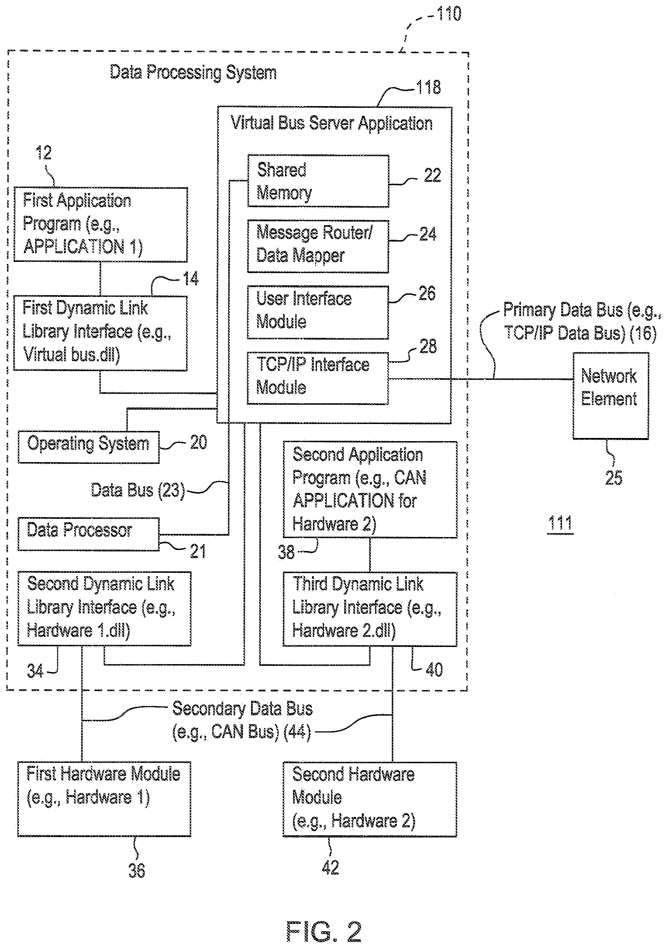

The data processing system 110 of FIG. 2 is similar to the data processing system 10 of FIG. 1, except the virtual bus server application 118 of the system 111 of FIG. 2 further comprises a TCP/IP interface module 28 and the first dynamic link library interface 34 has no link to the primary data bus 16. Instead, the TCP/IP interface module provides a communications interface and link between the virtual bus server application and the primary data bus 16. Like reference numbers in FIG. 1 and FIG. 2 indicate like elements.

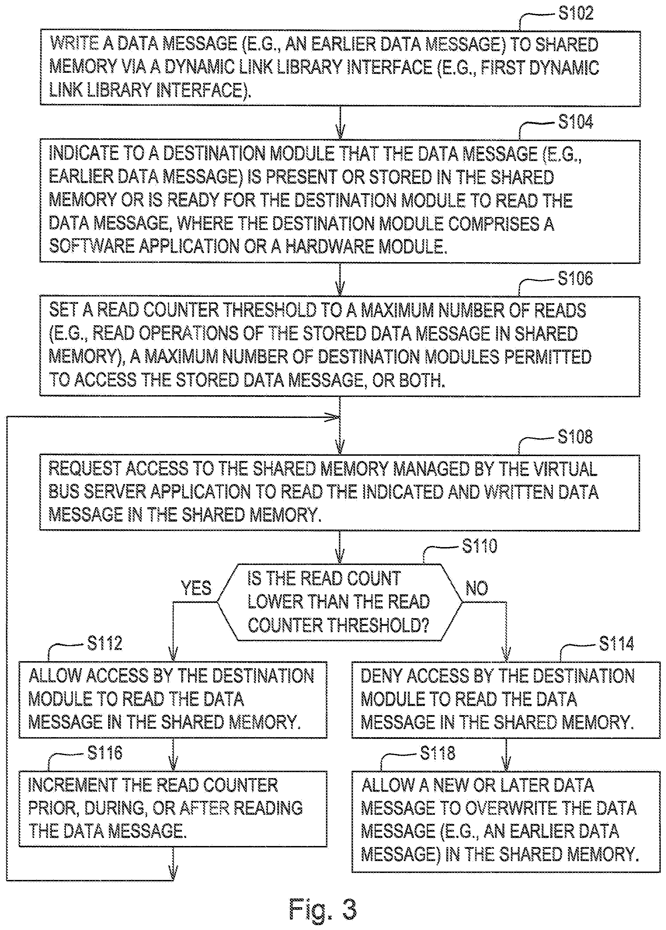

FIG. 3 is an illustrative example of a method for managing a data processing system or the shared memory of a virtual server application of the data processing system. The method of FIG. 3 begins in step S102.

In step S102, an application (12, 38) or hardware module (36, 42) associated with the data processing system (10 or 110) writes a data message (e.g., an earlier data message) to the shared memory 22 via a dynamic link library interface (14, 34, or 40). For example, the application or hardware module writes a data message and a destination address or destination identifier of a destination module (e.g., an application or software module).

In step S104, the virtual bus server application (18 or 118) or the data processor 21 indicates to a destination module that the data message (e.g., earlier data message) is present or stored in the shared memory 22 or is ready for the destination module to read the data message. The destination module comprises an application, a software module, or a hardware module.

In step S106, the virtual bus server application (18 or 118) the data processor 21 sets a read counter threshold to a maximum number of reads (e.g., read operations of the stored data message in the shared memory 22), a maximum number of destination modules permitted to access the stored data message, or both. The maximum number of destination modules may depend upon the configuration of the data processing system, such as the number of destination modules (e.g., applications 12 or 38) or hardware (36, 42) present or the type or configuration of such destination modules as related to the actual or potential content of the data message.

In step S108, the destination module (12, 38, 36, or 42) requests access to the shared memory 22 managed by the virtual bus server application (18 or 118) to read indicated and written data messages in the shared memory 22. For example, the destination module may make the request for access via a dynamic link library interface (14, 34, or 40).

In step S110, the virtual bus server application (18 or 118) or data processor 21 determines if the read count is lower than the read counter threshold. If the read count in the read counter is lower than the read counter threshold, the method continues with step S112. However, if the read count in the read counter is higher or equal to the read counter threshold, the method continues with step S114.

In step S112, the virtual bus server application (18 or 118) or data processor 21 allows access by the destination module to read the data message in the shared memory 22. In one example, the virtual bus server application (18 or 118) first requires the destination module to respond to an authentication procedure (e.g., identifier and password entry) prior to allowing the access of the destination module to the data message stored in the shared memory 22. In another example, the virtual bus server application (18 or 11) first requires the destination module to enter into an encrypted communication mode prior to allowing the access of the destination module to the data message stored in the shared memory 22.

In step S114, the virtual bus server application (18 or 118) or data processor 21 denies access by the destination module to read the data message in the shared memory 22.

Step S116 is carried out following step S112. In step S116, the virtual bus server application (18 or 118) or the data processor 21 increments the read counter prior, during, or after reading the data message in step S112.

Step S118 is executed after step S114. In step S118, the virtual bus server application (18 or 118) or the data processor 21 allows a new or later data message to overwrite the data message (e.g., an earlier data message) in the shared memory 22.

Having described the preferred embodiment, it will become apparent that various modifications can be made without departing from the scope of the invention as defined in the accompanying claims.

## Claims

1. An electronic data processing system (10) comprising:
a first application program (12);
an operating system (20) for execution by the electronic data processing system (10);
a virtual bus server application (18) comprising a shared memory (22) and a message router (24), the message router (24) operable to route data messages between the first application program (12) and a first hardware module (36) as a network element;
a first interface (14) providing an interface between the first application program (12) and the virtual bus server application (18), the first interface (14) capable of communicating with the shared memory (22) of the virtual bus server application (18); and
a second interface (34) providing an interface between the virtual bus server application (18) and the first hardware module (36), the second interface (34) capable of communicating with the shared memory (22) of the virtual bus server application (18),
**characterized in that** the first application program (12) is capable of operating in a first mode and a second mode, the first mode comprising software emulation of a vehicle data bus (44) and the first hardware module (36) to develop or test the first application program (12) for proper functionality independent of the proper operation or compatibility of the first hardware module (36) and the second interface (34); the second mode comprising communications access to the first hardware module (36) via the vehicle data bus (44),
that the first interface (14) is a dynamic link library interface, that the second interface (34) is a dynamic link library interface and that the operating system (20) facilitates communication between the at least two dynamic link libraries in the shared memory (22).

2. The electronic data processing system (10) according to claim 1 wherein the shared memory (22) supports a virtual TCP/IP data connection, internal to the virtual bus server application (18) of the data processing system (10), the virtual TCP/IP or other data format data connection capable of exchanging data messages between the first dynamic link library interface (14) and the second dynamic link library interface (34) in the shared memory (22).

3. The electronic data processing system (10) according to claim 1 wherein the shared memory (22) uses the TCP/IP protocol or other data format to communicate with the first dynamic link library interface (14).

4. The electronic data processing system (10) according to claim 1 wherein the shared memory (22) uses the TCP/IP protocol or other data format to communicate with the second dynamic link library interface (34).

5. The electronic data processing system (10) according to claim 1 wherein the message router (24) passes through data from the first application program (12) via the first dynamic link library interface (14) and maps it to the address of the first hardware module (36).

6. The electronic data processing system (10) according to claim 1 wherein message router (24) passes through data from the first hardware module (36) via the second dynamic link library interface (34) and maps it to the address readable by the first application program (12) in the shared memory (22).

7. The electronic data processing system (10) according to claim 1 where the message router (24) routes data messages between the first application program (12) and a second application program (38) in the second mode.

8. The electronic data processing system (10) according to claim 7 further comprising a third dynamic link library interface (40) for providing an interface between the virtual bus server application (18) and the second application program (38) and between the virtual bus server application (18) and a second hardware module (42).

9. The electronic data processing system (10) according to claim 1 wherein the shared memory (22) supports communications between a primary data bus (16) and a secondary data bus (44), where the primary data bus (16) operates at a different speed in symbols, words, bytes, or bits per second than the secondary data bus (44).

10. The electronic data processing system (10) according to claim 1 wherein the shared memory (22) supports communications between a primary data bus (16) and a secondary data bus (44), where the primary data bus (16) operates with different data formats.

11. The electronic data processing system (10) according to claim 1 wherein the primary data bus (16) comprises a TCP/IP compatible data format and wherein the secondary data bus (44) comprises a CAN data bus data format or an Ethernet compatible data format.

12. The electronic data processing system (10) according to one of the preceding claims, operable to perform the following steps:
writing a data message to the shared memory (22) of the data processing system (10) via a dynamic link library interface (14, 34, 40);
indicating to a destination module (36, 42) via another dynamic link library interface (14, 34, 40) that the data message is stored in the shared memory (22) and is ready for the destination module (36, 42) to read the stored data message;
setting a read counter threshold to a maximum number of read operations of the stored data message in shared memory (22);
requesting access to the shared memory (22) to read the indicated and written data message; and
allowing access by the destination module (36, 42) to the data message in the shared memory (22) if the read count is lower than the read counter threshold.

13. The electronic data processing system (10) according to claim 12 wherein the destination module comprises a software application and/or a hardware module (36, 42).

14. The electronic data processing system (10) according to claim 12 further operable to denying access by the destination module to read the data message in the shared memory (22) if the read count is higher than or equal to the read counter threshold.

15. The electronic data processing system (10) according to claim 14 further operable to allowing a new data message to overwrite the data message in the shared memory (22).

## Patentansprüche

1. Elektronisches Datenverarbeitungssystem (10), das Folgendes umfasst:
ein erstes Anwendungsprogramm (12);
ein Betriebssystem (20) zur Ausführung durch das elektronische Datenverarbeitungssystem (10);
eine virtuelle Bus-Serveranwendung (18), die einen gemeinsam genutzten Speicher (22) und einen Nachrichten-Router (24) umfasst, wobei der Nachrichten-Router (24) betrieben werden kann, um als ein Netzelement Datennachrichten zwischen dem ersten Anwendungsprogramm (12) und einem ersten Hardware-Modul (36) zu leiten;
eine erste Schnittstelle (14), die eine Schnittstelle zwischen dem ersten Anwendungsprogramm (12) und der virtuellen Bus-Serveranwendung (18) bereitstellt, wobei die erste Schnittstelle (14) in der Lage ist, mit dem gemeinsam genutzten Speicher (22) der virtuellen Bus-Serveranwendung (18) zu kommunizieren; und
eine zweite Schnittstelle (34), die eine Schnittstelle zwischen der virtuellen Bus-Serveranwendung (18) und dem ersten Hardware-Modul (36) bereitstellt, wobei die zweite Schnittstelle (34) in der Lage ist mit dem gemeinsam genutzten Speicher (22) der virtuellen Bus-Serveranwendung (18) zu kommunizieren,
**dadurch gekennzeichnet, dass** das erste Anwendungsprogramm (12) in der Lage ist, in einem ersten Modus und in einem zweiten Modus zu arbeiten, wobei der erste Modus eine Software-Emulation eines Fahrzeugdatenbusses (44) und dem ersten Hardware-Modul (36) umfasst, um das erste Anwendungsprogramm (12) unabhängig von der geeigneten Bedienung oder Kompatibilität des ersten Hardware-Moduls (36) und der zweiten Schnittstelle (34) für die geeignete Funktionalität zu entwickeln oder auf die geeignete Funktionalität zu testen; wobei der zweite Modus über den Fahrzeugdatenbus (44) Kommunikationszugriff auf das erste Hardware-Modul (36) umfasst,
dass die erste Schnittstelle (14) eine Schnittstelle mit einer Bibliothek für dynamische Links ist, dass die zweite Schnittstelle (34) eine Schnittstelle mit einer Bibliothek für dynamische Links ist und dass das Betriebssystem (20) die Kommunikation zwischen den mindestens zwei Schnittstellen mit einer Bibliothek für dynamische Links in dem gemeinsam genutzten Speicher (22) ermöglicht.

2. Elektronisches Datenverarbeitungssystem (10) nach Anspruch 1, wobei der gemeinsam genutzte Speicher (22) innerhalb der virtuellen Bus-Serveranwendung (18) des Datenverarbeitungssystems (10) eine virtuelle TCP/IP-Datenverbindung unterstützt, wobei die virtuelle TCP/IP-Datenverbindung oder eine andere Datenformat-Datenverbindung in der Lage ist, Datennachrichten zwischen der ersten Schnittstelle (14) mit einer Bibliothek für dynamische Links und der zweiten Schnittstelle (34) mit einer Bibliothek für dynamische Links in dem gemeinsam genutzten Speicher (22) auszutauschen.

3. Elektronisches Datenverarbeitungssystem (10) nach Anspruch 1, wobei der gemeinsam genutzte Speicher (22) das TCP/IP-Protokoll oder ein anderes Datenformat verwendet, um mit der ersten Schnittstelle (14) mit einer Bibliothek für dynamische Links zu kommunizieren.

4. Elektronisches Datenverarbeitungssystem (10) nach Anspruch 1, wobei der gemeinsam genutzte Speicher (22) das TCP/IP-Protokoll oder ein anderes Datenformat verwendet, um mit der zweiten Schnittstelle (34) mit einer Bibliothek für dynamische Links zu kommunizieren.

5. Elektronisches Datenverarbeitungssystem (10) nach Anspruch 1, wobei der Nachrichten-Router (24) über die erste Schnittstelle (14) mit einer Bibliothek für dynamische Links Daten von dem ersten Anwendungsprogramm (12) durchlässt und diese auf die Adresse des ersten Hardware-Moduls (36) abbildet.

6. Elektronisches Datenverarbeitungssystem (10) nach Anspruch 1, wobei der Nachrichten-Router (24) über die zweite Schnittstelle (34) mit einer Bibliothek für dynamische Links Daten von dem ersten Hardware-Modul (36) durchlässt und diese auf die Adresse abbildet, die von dem ersten Anwendungsprogramm (12) in dem gemeinsam genutzten Speicher (22) gelesen werden kann.

7. Elektronisches Datenverarbeitungssystem (10) nach Anspruch 1, wobei der Nachrichten-Router (24) in dem zweiten Modus Datennachrichten zwischen dem ersten Anwendungsprogramm (12) und einem zweiten Anwendungsprogramm (38) leitet.

8. Elektronisches Datenverarbeitungssystem (10) nach Anspruch 7, das ferner eine dritte Schnittstelle (40) mit einer Bibliothek für dynamische Links umfasst, um eine Schnittstelle zwischen der virtuellen Bus-Serveranwendung (18) und dem zweiten Anwendungsprogramm (38) und zwischen der virtuellen Bus-Serveranwendung (18) und einem zweiten Hardware-Module (42) bereitzustellen.

9. Elektronisches Datenverarbeitungssystem (10) nach Anspruch 1, wobei der gemeinsam genutzte Speicher (22) eine Kommunikation zwischen einem primären Datenbus (16) und einem sekundären Datenbus (44) unterstützt, wobei der primäre Datenbus (16) bei einer unterschiedlichen Geschwindigkeit von Symbolen, Wörtern, Bytes oder Bits pro Sekunde als der sekundäre Datenbus (44) arbeitet.

10. Elektronisches Datenverarbeitungssystem (10) nach Anspruch 1, wobei der gemeinsam genutzte Speicher (22) eine Kommunikation zwischen einem primären Datenbus (16) und einem sekundären Datenbus (44) unterstützt, wobei der primäre Datenbus (16) mit unterschiedlichen Datenformaten arbeitet.

11. Elektronisches Datenverarbeitungssystem (10) nach Anspruch 1, wobei der primäre Datenbus (16) ein TCP/IP kompatibles Datenformat umfasst und wobei der sekundäre Datenbus (44) ein CAN-Datenbus-Datenformat oder ein Datenformat, das mit Ethernet kompatibel ist, umfasst.

12. Elektronisches Datenverarbeitungssystem (10) nach einem der vorhergehenden Ansprüche, das betrieben werden kann, um die folgenden Schritte durchzuführen:
Schreiben einer Datennachricht in den gemeinsam genutzten Speicher (22) des Datenverarbeitungssystems (10) über eine Schnittstelle (14, 34, 40) mit einer Bibliothek für dynamische Links;
einem Zielmodul (36,42) über eine andere Schnittstelle (14, 34, 40) mit einer Bibliothek für dynamische Links Anzeigen, dass die Datennachricht in dem gemeinsam genutzten Speicher (22) gespeichert ist und bereit ist, dass das Zielmodul (36, 42) die gespeicherte Datennachricht liest;
Einstellen eines Lesezähler-Schwellenwerts auf eine maximale Anzahl von Lesevorgängen der gespeicherten Datennachricht in dem gemeinsam genutzten Speicher (22);
Anfordern von Zugriff auf den gemeinsam genutzten Speicher (22), um die angezeigte und geschriebene Datennachricht zu lesen; und
Erlauben von Zugriff auf die Datennachricht in dem gemeinsam genutzten Speicher (22) durch das Zielmodul (36,42), wenn die Lesezahl kleiner als der Lesezähler-Schwellenwert ist.

13. Elektronisches Datenverarbeitungssystem (10) nach Anspruch 12, wobei das Zielmodul eine Software-Anwendung und/oder ein Hardware-Modul (36, 42) umfasst.

14. Elektronisches Datenverarbeitungssystem (10) nach Anspruch 12, das ferner betrieben werden kann, um Zugriff durch das Zielmodul, um die Datennachricht in dem gemeinsam genutzten Speicher (22) zu lesen, zu verweigern, wenn die Lesezahl größer oder gleich dem Lesezähler-Schwellenwert ist.

15. Elektronisches Datenverarbeitungssystem (10) nach Anspruch 14, das ferner betrieben werden kann, um einer neuen Datennachricht zu erlauben die Datennachricht in dem gemeinsam genutzten Speicher (22) zu überschreiben.

## Revendications

1. Système (10) de traitement électronique de données, comprenant :
un premier programme d'application (12) ;
un système d'exploitation (20) destiné à être exécuté par le système (10) de traitement électronique de données ;
une application serveur de bus virtuel (18) comprenant une mémoire partagée (22) et un routeur de messages (24), le routeur de messages (24) étant utilisable pour router des messages de données entre le premier programme d'application (12) et un premier module matériel (36) jouant le rôle d'un élément de réseau ;
une première interface (14) fournissant une interface entre le premier programme d'application (12) et l'application serveur de bus virtuel (18), la première interface (14) étant apte à communiquer avec la mémoire partagée (22) de l'application serveur de bus virtuel (18) ; et
une deuxième interface (34) fournissant une interface entre l'application serveur de bus virtuel (18) et le premier module matériel (36), la deuxième interface (34) étant apte à communiquer avec la mémoire partagée (22) de l'application serveur de bus virtuel (18),
**caractérisé en ce que** le premier programme d'application (12) est apte à fonctionner dans un premier mode et un deuxième mode, le premier mode comprenant une émulation logicielle d'un bus de données de véhicule (44) et du premier module matériel (36) en vue de mettre au point ou de mettre à l'essai le premier programme d'application (12) pour en assurer le bon fonctionnement indépendamment du bon fonctionnement ou de la compatibilité du premier module matériel (36) et de la deuxième interface (34) ; le deuxième mode comprenant un accès en communications au premier module matériel (36) via le bus de données de véhicule (44),
**en ce que** la première interface (14) est une interface de bibliothèque de liens dynamiques, **en ce que** la deuxième interface (34) est une interface de bibliothèque de liens dynamiques et **en ce que** le système d'exploitation (20) facilite la communication entre lesdites au moins deux bibliothèques de liens dynamiques dans la mémoire partagée (22).

2. Système (10) de traitement électronique de données selon la revendication 1, dans lequel la mémoire partagée (22) prend en charge une connexion de données TCP/IP virtuelle, interne à l'application serveur de bus virtuel (18) du système (10) de traitement de données, la connexion de données TCP/IP virtuelle ou sous un autre format de données étant apte à échanger des messages de données entre la première interface de bibliothèque de liens dynamiques (14) et la deuxième interface de bibliothèque de liens dynamiques (34) dans la mémoire partagée (22).

3. Système (10) de traitement électronique de données selon la revendication 1, dans lequel la mémoire partagée (22) fait appel au protocole TCP/IP ou à un autre format de données pour communiquer avec la première interface de bibliothèque de liens dynamiques (14).

4. Système (10) de traitement électronique de données selon la revendication 1, dans lequel la mémoire partagée (22) fait appel au protocole TCP/IP ou à un autre format de données pour communiquer avec la deuxième interface de bibliothèque de liens dynamiques (34).

5. Système (10) de traitement électronique de données selon la revendication 1, dans lequel le routeur de messages (24) assure le transfert de données issues du premier programme d'application (12) via la première interface de bibliothèque de liens dynamiques (14) et les mappe sur l'adresse du premier module matériel (36).

6. Système (10) de traitement électronique de données selon la revendication 1, dans lequel le routeur de messages (24) assure le transfert de données issues du premier module matériel (36) via la deuxième interface de bibliothèque de liens dynamiques (34) et les mappe sur l'adresse lisible par le premier programme d'application (12) dans la mémoire partagée (22).

7. Système (10) de traitement électronique de données selon la revendication 1, dans lequel le routeur de messages (24) route des messages de données entre le premier programme d'application (12) et un deuxième programme d'application (38) dans le deuxième mode.

8. Système (10) de traitement électronique de données selon la revendication 7, comprenant en outre une troisième interface de bibliothèque de liens dynamiques (40) destinée à fournir une interface entre l'application serveur de bus virtuel (18) et le deuxième programme d'application (38) et entre l'application serveur de bus virtuel (18) et un deuxième module matériel (42).

9. Système (10) de traitement électronique de données selon la revendication 1, dans lequel la mémoire partagée (22) prend en charge les communications entre un bus de données primaire (16) et un bus de données secondaire (44), le bus de données primaire (16) fonctionnant à une vitesse, exprimée en symboles, mots, octets ou bits par seconde, différente de celle du bus de données secondaire (44).

10. Système (10) de traitement électronique de données selon la revendication 1, dans lequel la mémoire partagée (22) prend en charge les communications entre un bus de données primaire (16) et un bus de données secondaire (44), le bus de données primaire (16) fonctionnant avec des formats de données différents.

11. Système (10) de traitement électronique de données selon la revendication 1, dans lequel le bus de données primaire (16) comprend un format de données compatible TCP/IP, et dans lequel le bus de données secondaire (44) comprend un format de données de bus de données CAN ou un format de données compatible Ethernet.

12. Système (10) de traitement électronique de données selon l'une des revendications précédentes, utilisable pour accomplir les étapes suivantes consistant à :
écrire un message de données dans la mémoire partagée (22) du système (10) de traitement de données via une interface de bibliothèque de liens dynamiques (14, 34, 40) ;
indiquer à un module de destination (36, 42) via une autre interface de bibliothèque de liens dynamiques (14, 34, 40) que le message de données est stocké dans la mémoire partagée (22) et que le message de données stocké est prêt à être lu par le module de destination (36, 42) ;
fixer un seuil de compteur de lecture à un nombre maximal d'opérations de lecture du message de données stocké dans la mémoire partagée (22) ;
demander l'accès à la mémoire partagée (22) pour lire le message de données écrit et indiqué ; et
autoriser l'accès par le module de destination (36, 42) au message de données dans la mémoire partagée (22) si le compte de lecture est inférieur au seuil de compteur de lecture.

13. Système (10) de traitement électronique de données selon la revendication 12, dans lequel le module de destination comprend une application logicielle et/ou un module matériel (36, 42).

14. Système (10) de traitement électronique de données selon la revendication 12, utilisable en outre pour refuser l'accès par le module de destination pour lire le message de données dans la mémoire partagée (22) si le compte de lecture est supérieur ou égal au seuil de compteur de lecture.

15. Système (10) de traitement électronique de données selon la revendication 14, utilisable en outre pour permettre l'écrasement du message de données par un nouveau message de données dans la mémoire partagée (22).
